# EUROPEAN PATENT SPECIFICATION

(11) **EP 2 384 407 B1**
(45) Date of publication and mention of the grant of the patent: **15.02.2017**
(21) Application number: 10714060.0
(22) Date of filing: 16.03.2010
(51) Int. Cl.: F16K 31/40, F16K 31/06

(54) **ELECTRONICALLY CONTROLLED VALVES**
ELEKTRONISCH GESTEUERTE VENTILE
VANNES CONTRÔLÉES ÉLECTRONIQUEMENT

(30) Priority: 16.03.2009 EP 09155294; 16.03.2009 EP 09155293
(43) Date of publication of application: 09.11.2011
(73) Proprietor: Artemis Intelligent Power Limited, Loanhead, Midlothian EH20 9TB (GB)
(72) Inventor: MCINTYRE, Fergus, Robert, Loanhead, Midlothian EH20 9TB (GB); STEIN, Uwe, Bernhard, Pascal, Loanhead, Midlothian EH20 9TB (GB)
(74) Representative: Alistair Hindle Associates Limited
(86) International application number: PCT/GB2010/050454
(87) International publication number: WO 2010/106362

(56) References cited:
- EP-A- 1 327 810
- GB-A- 2 430 246
- US-A- 5 271 599

## Description

### Field of the Invention

The present invention relates to the field of electronically controlled valves.

### Background to the Invention

The invention concerns electronically controlled valves suitable for use in regulating the flow of fluid between a working chamber of a fluid working machine and a manifold. The electronically controlled valves include a valve member and valve seat and, accordingly, are face-seating. Valves according to the invention may be useful with a wide range of types of fluid working machine, or in unrelated applications.

However, issues concerning the invention will now be discussed with reference to the specific example of valves suitable for use with known fluid working machines which comprise a plurality of working chambers of cyclically varying volume, in which the displacement of fluid through the working chambers is regulated by electronically controlled valves, on a cycle by cycle basis and in phased relationship to cycles of working chamber volume, to determine the net throughput of fluid through the machine.

Fluid working machines of this type include fluid-driven and/or fluid-driving machines, such as pumps, motors, and machines which can function as either a pump or as a motor in different operating modes. Although the invention will be illustrated with reference to applications in which the fluid is a liquid, such as a generally incompressible hydraulic liquid, the fluid could alternatively be a gas.

For example, EP 0 361 927 disclosed a method of controlling the net throughput of fluid through a multi-chamber pump by opening and/or closing electronically controllable poppet valves, in phased relationship to cycles of working chamber volume, to regulate fluid communication between individual working chambers of the pump and a low pressure manifold. As a result, individual chambers are selectable by a controller, on a cycle by cycle basis, to either displace a predetermined fixed volume of fluid or to undergo an idle cycle with no net displacement of fluid, thereby enabling the net throughput of the pump to be matched dynamically to demand.

EP 0 494 236 developed this principle and included electronically controllable poppet valves which regulate fluid communication between individual working chambers and a high pressure manifold, thereby facilitating the provision of a fluid working machine functioning as either a pump or a motor in alternative operating modes.

EP 1 537 333 introduced the possibility of part cycles, allowing individual cycles of individual working chambers to displace any of a plurality of different volumes of fluid to better match demand.

Fluid working machines of the type disclosed in EP 0 361 927, EP 0 494 236 and EP 1 537 333 require rapidly opening and closing electronically controlled valves capable of regulating the flow of fluid into and out of a working chamber from and into the low pressure manifold, and in some embodiments, the high pressure manifold.

The electronically controlled valves typically require to open and close quickly and in some circumstances require to open against a pressure differential. Some methods for opening valves against a pressure differential consume a substantial amount of energy which is wasteful. It is known to provide a pilot operated valve including a pilot stage which is easier to open against a pressure differential than a main stage.

Such valves are known, for example, from GB 2,430,246, which discloses the features of the preamble of claim 1.

The invention aims to provide improved pilot operated electronically controlled valves suitable for regulating the supply of fluid between a working chamber of a fluid working machine and a manifold, which can open quickly against a pressure differential while minimising energy consumption.

### Summary of the Invention

According to a first aspect of the invention there is provided an electronically controlled valve for regulating the supply of fluid between a working chamber of a fluid working machine and a manifold, the valve comprising a body defining a primary valve seat, a fluid flow passage extending through the valve body from the primary valve seat, a travelling member, and an electromagnet, the travelling member comprising a sealing member and an armature, the valve having a closed position in which a seal is formed between the primary valve seat and the sealing member, and an open position in which the sealing member is spaced apart from the primary valve seat, the valve further comprising a pilot valve seat and a pilot valve sealing member, characterised by a pilot valve elastic member charged in use by the movement of the armature towards the electromagnet during closure of the valve to provide a return force urging the pilot valve sealing member away from the pilot valve seat and by the electronically controlled valve comprising a first fluid port and a second fluid port, the valve regulating the flow of fluid between the (or each) first fluid port and the (or each) second fluid port (the (or each) first fluid port is in fluid communication with the (or each) second fluid port when the sealing member is spaced apart from the primary valve seat and the pilot valve member is spaced apart from the pilot valve seat and the (or each) first fluid port is sealed from the (or each) second fluid port when the sealing member is in sealing contact with the primary valve seat and the pilot valve member is in sealing contact with the pilot valve seat), the valve further comprising a pilot valve flow passage which is closed off when the pilot valve member is in sealing contact with the pilot valve seat and is open when the pilot valve member is spaced apart from the pilot valve seat, wherein, when the pilot valve flow passage is open and the sealing member is in sealing contact with the primary valve seat, the (or each) first fluid port is in direct fluid communication with the (or each) second fluid port through the pilot valve flow passage.

Thus, energy from the movement of the armature is stored in the pilot valve elastic member as elastic potential energy and is used to provide a return force to urge the pilot valve sealing member away from the pilot valve seat and thereby facilitate opening of the valve. This arrangement can be energy efficient in that it is usually important for the armature to move quickly in order to facilitate rapid opening of the valve and, in this arrangement, not all of the kinetic energy is dissipated through damping. Furthermore, if the same total return force was provided by way of elastic members charged only by the movement of the pilot valve sealing member, the result would be a greater force resisting opening of the valve, slowing opening and/or increasing energy consumption. Still further, a substantial force can be generated readily when an armature is very close to contacting an electromagnet and so in this arrangement a pilot valve elastic member may be used which is sufficiently strong to provide a substantial return force.

Typically, the valve further comprises one or more further elastic members charged by movement of the pilot valve sealing member which provide a return force urging the pilot valve sealing member away from the pilot valve seat. The one or more further elastic members may be indexed between the armature and the valve body, the pilot valve sealing member and the valve body, and/or between the armature and the pilot valve sealing member.

Preferably, the armature moves along a path having first and second ends, the armature moving from the first end to the second end during closure of the valve, wherein the pilot valve elastic member biases the pilot valve sealing member only when the armature is proximate the second end of the path. This minimises resistance to closure of the valve, particularly when the armature is proximate the first end of the path, where the attractive force from the electromagnet will typically be lower. Furthermore, the armature will typically have greatest kinetic energy, and be subject to the greatest force from the electromagnet, proximate the second end of the path.

Typically, the pilot valve elastic member biases the pilot valve sealing member only when the armature has travelled at least 75%, and preferably at least 90%, of the way from the first end to the second end of the path.

It may be that the pilot valve elastic member only contacts the pilot travelling member, to urge the pilot valve sealing member away from the pilot valve seat, when the armature is proximate the second end of the path and is spaced apart from the pilot travelling member when the armature is proximate the first end of the path.

It may be that the return force is exerted on the pilot valve by the pilot valve elastic member only after the electromagnet has released the armature.

The pilot valve elastic member may be charged in use by the movement of the armature towards the electromagnet only once the sealing member has impacted the primary valve seat.

Thus, an electronically controlled valve is provided which has a configuration which reduces the peak deceleration forces acting on the armature and concurrently charges a pilot valve elastic member to provide a return force to facilitate reopening of the valve.

The pilot valve elastic member may also be charged in use by the movement of the armature towards the electromagnet before the sealing member has impacted the primary valve seat.

Preferably, the pilot valve elastic member provides a return force urging the pilot valve away from the pilot valve seat without concurrently urging the sealing member away from the primary valve member. A greater net force can be applied to the pilot valve by the pilot valve elastic member if the movement of the pilot valve member away from the pilot valve seat is not coupled to concurrent movement of the sealing member away from the primary valve member.

Preferably, the sealing member is movable into sealing contact with the primary valve seat without the pilot valve member moving into sealing contact with the pilot valve seat. This facilitates rapid closure. Closure of the main stage blocks off a substantially greater amount of fluid flow than closure of the pilot stage and so closure of the main stage (i.e. bringing the sealing member into sealing contact with the primary valve seat) is a higher priority than closure of the pilot stage (i.e. bringing the pilot valve member into sealing contact with the pilot valve seat).

If the or each first fluid port is connected to a working chamber of a fluid working machine and the or each second fluid port is connected to a manifold, such that the valve regulated the flow of fluid between the working chamber and the manifold, the pilot valve provides a flow path to enable the pressure of fluid within the working chamber to equilibrate within the pressure of fluid within the manifold, enabling the main valve to open (the sealing member to move away from the primary valve seat). This occurs as working chambers are closed volumes (albeit closed volumes having a volume which cycles in use). Preferably, the valve does not include a throttle between the pilot valve member and the or each second port.

The electronically controlled valve may further comprise a decelerating mechanism (such as a damping mechanism) operable to slow the movement of the armature during closure of the valve and the sealing member and armature may be moveable relative to each other such that the armature can continue to move and decelerate due to the decelerating mechanism after the sealing member has impacted the primary valve seat.

Thus, even though the sealing member must decelerate over a very short distance on contact with the primary valve seat, during closure of the valve, the armature can decelerate over a longer distance and therefore be subject to lower forces than would be the case if the armature had to decelerate over the same distance as the sealing member. The armature typically constitutes the majority of the mass of the electronically controlled valve and so this configuration reduces the chance of a component of the travelling member (e.g. the armature or a valve stem) breaking and thereby increases the operating lifetime of the electronically controlled valve.

By 'after the sealing member has impacted the primary valve seat' we include the possibility that the decelerating mechanism starts to act on the armature to cause the armature to decelerate before the sealing member has impacted the primary valve seat and continues to act on the armature to cause the armature to decelerate after the sealing member has impacted the primary valve seat, and also include the possibility that a period of time elapses between the sealing member impacting the primary valve seat and the decelerating mechanism acting on the armature to cause the armature to decelerate. Nevertheless, the decelerating mechanism preferably begins to act on the armature to cause the armature to decelerate substantially when the sealing member impacts the primary valve seat.

The decelerating mechanism is typically a damping mechanism which decelerates the armature, relative to the sealing member, and disperses at least the majority of the kinetic energy of the armature. The damping mechanism may disperse substantial all of the kinetic energy of the armature. The damping mechanism may also store and return a minority of the kinetic energy of the armature. However, the decelerating mechanism may be an elastic energy storage mechanism which stores and returns the majority of the kinetic energy of the armature.

The decelerating mechanism may act on the armature, or a structure which is fixedly connected to the armature, to slow movement of the armature relative to the valve body after the sealing member has impacted the primary valve seat during closure of the valve. For example, the decelerating mechanism may comprise a damping mechanism in the form of a squeeze film defining surface of the valve body, operable to form a squeeze film between the said defining surface and a surface of the travelling member (typically a surface of the armature) to decelerate the armature.

The decelerating mechanism may be integral to the travelling member and operable to slow movement of the armature relative to the sealing member after the sealing member has impacted the primary valve seat during closure of the valve.

It may be that the sealing member and armature are coupled so that the sealing member and armature move relative to each other only when the valve closing speed exceeds a threshold. For example, the travelling member may comprise a first portion including the armature and a second portion including the sealing member, wherein the first portion and second portion are moveable relative to each other but the first portion is biased towards the second portion by a biasing member, for example an elastic member such as a spring, such that the first portion contacts and moves with the second portion when the valve closing speed is below a threshold but the first and second portions move relative to each other, against the biasing member, when the sealing portion impacts the primary valve seat and the valve closing speed exceeds the threshold. This arrangement can have the effect that the armature and sealing member move relative to each other only in circumstances where it is most important to protect the travelling member from damage, for example where the valve is closed unusually quickly due to a malfunction in a fluid-working machine in which the valve is incorporated, but reduces wear in other circumstances. The said second portion may comprise the sealing member and a valve stem.

Preferably, the travelling member further comprises an actuated closure member which is connected in fixed relation to the armature at least during closure of the valve, wherein the decelerating mechanism is operable to slow movement of the actuated closure member relative to the sealing member after the sealing member has impacted the primary valve seat during closure of the valve, thereby slowing movement of the armature relative to the sealing member.

The damping mechanism may be operable to slow movement of the actuated closure member relative to the sealing member after the sealing member has impacted the primary valve seat during closure of the valve, thereby slowing movement of the armature relative to the sealing member. The primary valve seat may be formed in the sealing member, or the actuated closure member. The actuated closure member, or a part thereof, may function as pilot valve sealing member.

The actuated closure member may be connected in fixed relation to the armature by a rigid valve stem. The armature and actuated closure member may be moveable relative to each other but the armature, or a member fixedly attached thereto, may engage with the actuated closure member, or a member fixedly attached thereto, at least during closure of the valve, so that the actuated closure member is connected in fixed relation to the armature at least during closure of the valve.

Preferably, the decelerating mechanism is a damping mechanism which defines at least in part a fluid containing volume when the sealing member is spaced apart from the primary valve seat, from which fluid is displaced when the valve is closed, wherein the flow of fluid from the fluid containing volume is restricted during closure of the valve to thereby damp the movement of the armature.

Preferably, the sealing member is located intermediate the actuated closure member and the primary valve seat such that, in the closed position, a seal is formed between the primary valve seat and the sealing member and a seal is formed between the sealing member and the actuated closure member, thereby closing off the fluid flow passage, and, in the open position, the sealing member is spaced apart from the primary valve seat.

In this case, the fluid containing volume is preferably defined between the sealing member and the actuated closure member and the sealing member and actuated closure member cooperate to restrict the flow of fluid out from the fluid containing volume during closure so as to enable the actuated closure member, and therefore the armature, to continue to move after the sealing member has impacted the primary valve seat so as to damp movement of the actuated closure member, and therefore the armature, after the sealing member has impacted the primary valve seat.

Thus, as the sealing member and actuated closure member cooperate to restrict the flow of fluid out from the fluid containing volume during closure, impact forces on the actuated closure member are reduced, potentially increasing the lifetime of the electronically controlled valve or increasing the speed with which the valve may be closed without damaging the valve. The mass of the sealing member is preferably less than 10% of the mass of the armature, thereby ensuring that the most rapid deceleration is experienced by a member which has a substantially lower mass than the armature.

Where the fluid containing volume from out of which the flow of fluid is restricted is located intermediate the sealing member and the actuated closure member this has the advantage that the restriction need not slow down the opening of the valve by the sealing member moving away from the primary valve seat. Preferably, the opening of the valve by the sealing member moving away from sealing contact with the primary valve seat is substantially undamped.

Preferably, the sealing member is substantially inelastic. For example, the sealing member is typically metal. This enables the impact forces on the actuated closure member to be reduced in high performance machines where the use of elastic parts may compromise the speed of operation, reliability or operational lifetime.

The valve stem may be fixedly mounted to the actuated closure member. The sealing member may be slidably mounted on the valve stem intermediate the primary valve seat and the actuated closure member.

The sealing member may be slidably mounted on the actuated closure member. For example, the sealing member may comprise a collar slidable between a sealing position where the annular member contacts a seating formation of the actuated closure member in the closed position, and an open position in which the collar is spaced apart from the seat formation and the at least part of the fluid containing volume is defined between the collar and the seating formation.

The valve may comprise an armature and a rigid valve stem operable to transmit tensile forces from the armature to the actuated closure member to close the valve. The rigid valve stem is typically metal. The invention is especially useful in valves in which tensile forces are transmitted through the rigid valve stem to the actuated closure member, as many materials, such as metals, are more readily fractured by tensile than compressive forces. The armature may be rigidly fixed to the rigid valve stem (for example, integral to the rigid valve stem). The armature may be resiliently fixed to the rigid valve stem. The armature may be slidable between a position in which it is spaced apart from the rigid valve stem and a position in which it bears against a cooperating surface of the rigid valve stem, arranged to transmit tensile forces to the valve member to close the valve.

By electronically controlled valves, we include valves which can be opened or closed passively but actively opened, actively closed, actively latched open or actively latched closed. The invention is especially useful with actively closed valves where the valve member may encounter substantial closing forces. However, the invention is also useful with passively closed valves where the valve member may again encounter substantial closing forces due, for example, to a pressure differential across the valve.

The electronically controlled valve is typically biased either to the open position or the closed position, depending on the intended application of the valve.

Biasing means (such as one or more biasing members, for example one or more springs) are typically provided to bias the sealing member away from the actuated closure member. This has the effect of returning the sealing member to a position in which it is spaced apart from the actuated closure member when the valve is open. However, although biasing means (such as one or more biasing members, for example one or more springs) may extend between the sealing member and the actuated closure member to bias the sealing member to a position in which it is spaced apart from the actuated closure member, the sealing member and actuated closure member may be independently biased, for example, biasing means (such as one or more biasing members, for example one or more springs) may extend between the valve body and the actuated closure member and further biasing means (such as one or more biasing members, for example one or more springs) may extend between the valve body and the sealing member.

It may be that the actuated closure member is biased away from the primary valve seat and the sealing member is biased towards the actuated closure member.

Preferably, the primary valve seat and the sealing member are adapted to contact each other across a continuous annular sealing contact area when the valve is in the closed position.

Preferably, the primary valve seat and the sealing member have opposed sealing surfaces, which together form a seal when the valve is in the closed position. Typically, the opposed sealing surfaces of the primary valve seat and sealing member are adapted to minimise resistance to fluid flow into the volume between the primary valve seat and the sealing member into which fluid flows when the primary valve seat and sealing member separate during opening of the valve.

The sealing member and the actuated closure member may have opposed sealing surfaces, which together from a seal when the valve is in the closed position, wherein the sealing member and the actuated closure member further comprise opposed spaced apart surfaces, extending around the periphery of the opposed sealing surfaces and defining at least part of the fluid containing volume therebetween.

Preferably, the sealing member and actuated closure member are formed and arranged to ensure that they do not seal around the periphery of the region where they are opposed. If they did seal around the periphery of the region where they are opposed, fluid could be trapped between the opposed sealing surfaces, potentially damaging the sealing member or actuated closure member.

The sealing member and the actuated closure member may comprise cooperating pilot valve formations which together form a pilot valve which is openable whilst the primary valve seat and sealing member remain in sealing contact to provide a secondary path for fluid to flow through the valve.

The resulting pilot valve arrangement may facilitate the opening of the valve against a pressure gradient and, preferably, the pilot valve is openable against a greater pressure gradient than the valve as a whole.

Typically, one said cooperating pilot valve formation is a pilot primary valve seat and the other said cooperating pilot valve formation is a pilot valve element which cooperates with the pilot primary valve seat to form a pilot valve. Preferably, the cross-sectional area of the seal formed by the pilot valve is less than 10% and more preferably less than 2% of the cross-sectional area of the seal formed between the sealing member and the primary valve seat.

Preferably, either or both of the sealing member and actuated closure member comprise a fluid channel through which fluid can flow to equilibrate pressure.

Typically, a first fluid channel is provided which extends from a location on the sealing member, or more typically the actuated closure member, into the fluid containing volume between the sealing member and actuated closure member to provide a path for fluid to escape to avoid or reduce the amount of fluid trapped between the sealing member and actuated closure member.

The first fluid channel may extend through the actuated closure member. The first fluid channel may comprise an elongate recess in the surface of the actuated closure member opposite the sealing member. The first fluid channel may comprise an elongate recess in the surface of the sealing member opposite the actuated closure member. The first fluid channel may extend through the sealing member from a location on the sealing member on the outward side of where the sealing member contacts the primary valve seat (i.e. the side which is sealed from the fluid flow passage when the valve is in the closed position). The first fluid channel may extend to a said pilot valve sealing member of the actuated closure member in order that the pilot valve sealing member is in fluid communication with fluid on the outward side of the seal between the primary valve seat and sealing member.

The sealing member may comprise a second fluid channel extending through the sealing member from a location extending from the inward side of where the sealing member contacts the primary valve seat (i.e. the side towards the fluid flow passage) to form a seal when the valve is in the closed position. The said fluid channel may extend to a said pilot valve element of the sealing member in order to ensure that the pilot valve element is in fluid communication with the fluid flow passage. Where a pilot valve is present, first and second fluid channels are preferably provided in order that the fluid pressure on either side of the valve member is communicated to the pilot valve sealing members.

According to a second aspect of the invention there is provided a fluid working machine comprising a working chamber of cyclically varying volume, a fluid manifold and an electronically controlled valve according to the first aspect of the invention arranged to regulate the flow of fluid between the working chamber and the fluid manifold.

Preferably, the electronically controlled valve is oriented such that fluid flowing out from the working chamber to the fluid manifold during an exhaust stroke flows through the primary valve seat into the fluid passage in the same sense that the valve member moves from the open position to the closed position.

A plurality of said working chambers may be provided. The fluid working machine may further comprise a controller which is operable to actively control the said valve, and optionally one or more other valves, in phased relation to cycles of working chamber volume, to determine the net displacement of the fluid by the or each working chamber on a cycle by cycle basis, to thereby determine the time averaged net displacement of fluid by the working machine or one of more groups of said working chambers.

The fluid working machine may comprise both a high pressure manifold and a low pressure manifold, and a valve according to the present invention may regulate the flow of fluid between the working chamber and the high pressure manifold and/or between the working chamber and the low pressure manifold.

The said return force may be sufficient to open the valve. The said return force may increase the pressure differential against which the valve can open. It may be that the movement of the pilot sealing valve away from the pilot valve seat puts the said fluid manifold in direct fluid communication (without any intervening throttle) with the working chamber to cause the pressure in the working chamber to equilibrate with the pressure within the said fluid manifold prior to movement of the sealing member away from the primary valve seat.

Within this description and the appended claims, the terms "high pressure manifold" and "low pressure manifold" refer to manifolds with higher and lower pressures relative to each other. The pressure difference between the high and low pressure manifolds, and the absolute values of the pressure in the high and low pressure manifolds will depend on the application. A fluid working machine may have more than one low pressure manifold and may have more than one high pressure manifold.

Preferably, the volume of the working chamber cycles with a frequency of at least 20 Hertz. Preferably, the valve is operable to open, or to close, in less than 5ms. Preferably, the pressure differential between the low and high pressure manifolds is at least 10 bar.

The fluid working motor may function only as a motor, or only as a pump. Alternatively, the fluid working motor may function as a motor or a pump in alternative operating modes.

### Description of the Drawings

An example embodiment of the present invention will now be illustrated with reference to the following Figures in which:
Figure 1 is a sectional view through a valve according to the invention, in the open position;
Figure 2 is a sectional view through a detail of the valve of Figure 1, in the closed position;
Figure 3 is a sectional view through a valve member according to an alternative embodiment;
Figures 4A and 4B are plan views of the outward facing surface of the sealing member of the valve member of Figure 3 and the inward facing surface of the actuated closure member of the valve member of Figure 3 respectively;
Figures 5 through 7 are partial sectional views through alternative valve members;
Figures 8 and 9 are sectional views through alternative valve members;
Figure 10 is a sectional view through a further alternative valve member;
Figure 11 is a sectional view through a portion of a valve with an alternative biasing arrangement;
Figure 12 is a sectional view through an alternative valve in which a damping mechanism acts directly on the armature;
Figure 13 is a sectional view through an alternative valve in which a pilot valve return spring is charged during movement of the armature;
Figure 14 is a sectional view through an alternative valve having both a pilot valve return spring which is charged during movement of the armature and an armature which is decoupled from the sealing member;
Figure 15 is a sectional view through a detail of an alternative valve including a pilot valve; and
Figure 16 is a schematic diagram of a fluid-working machine including a valve according to the invention as low pressure valve.

### Detailed Description of an Example Embodiment

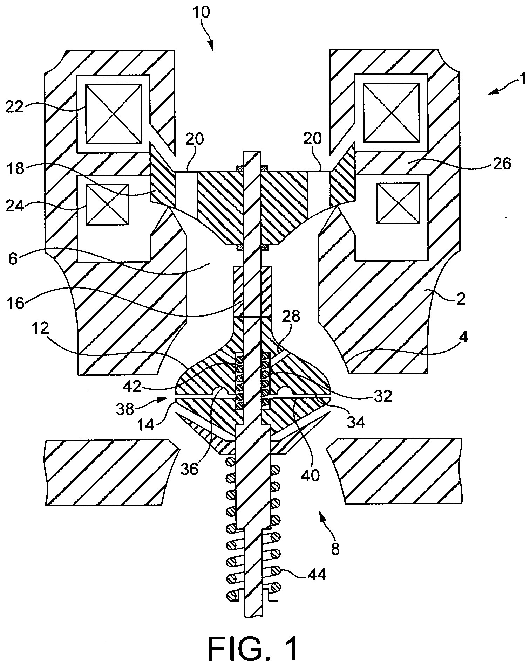

With reference to Figure 1, a valve 1 comprises a valve body 2 made from steel, which valve body defines a valve seat 4 and a fluid flow passage 6 which, when the valve is open, provides a passage for fluid to flow from an inlet 8 through which fluid is received from a working chamber (not shown in Figure 1), to an outlet 10. In many applications, fluid can flow alternately from the inlet to the outlet and then from the outlet to the inlet.

A valve member is formed by a sealing member 12 and an actuated closure member 14. The sealing member is slidably mounted around a rigid steel valve stem 16 which extends between the actuated closure member and an armature 18 which has apertures 20 through which fluid can flow to reduce drag.

The valve further comprises inward and outward electromagnets 22 and 24 respectively. Magnetic circuits are formed by the valve body, a flux bridge 26 and the armature 18. By "inward" and "outward" we refer to the sense in which the valve member moves to close the valve and the sense in which the valve member moves to open the valve respectively.

The sealing member has a passage 28 extending from the inward facing surface of the sealing member to a chamber 32 recessed in the outward facing surface 34 of the sealing member. The outward facing surface of the sealing member includes a small annular channel 36 which cooperates with the fluid-containing volume 38 between the outward facing surface of the sealing member and the inward facing surface 40 of the actuated closure member.

A first biasing spring 42, which extends between the sealing member and the actuated closure member, biases the sealing member away from the actuated closure member and a second biasing spring 44, which extends between a portion of the valve housing and the valve stem, biases the sealing member away from the valve seat. In alternative embodiments, the valve member might be biased toward the closed position.

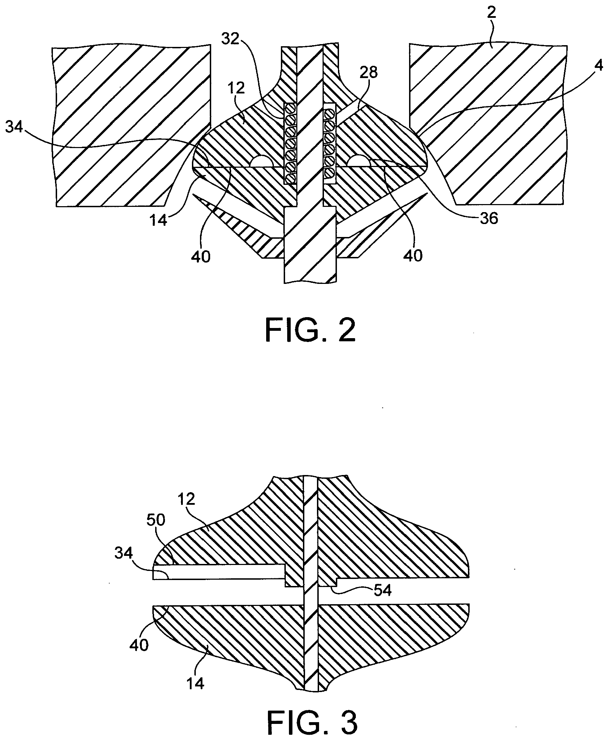

The valve member is operable between the open position shown in Figure 1 and a closed position. In the open position, the armature, valve stem and actuated closure member are at the outward limit of their travel and the sealing member is spaced apart from the valve seat to allow fluid to flow between the inlet and the outlet by way of the fluid flow passage and the resulting gap between the sealing member and the valve seat. The sealing member is also slightly spaced apart from the actuated closure member by the action of the first biasing spring. In the closed position, a detail of which is illustrated in Figure 2, the actuated closure member is held against and applies force to the sealing member such that a seal is formed between the actuated closure member and the sealing member and a seal is formed between the sealing member and the valve seat, thereby closing the valve and preventing fluid from flowing from the inlet to the outlet, or vice versa.

In this example embodiment, the valve member is moved between the open position and the closed position by the action of the electromagnets which act on the armature when a current is applied. The force on the armature is transmitted as a tensile force through the valve stem to the actuated closure member. In a conventional poppet valve having a unitary metal valve head, the entire mass of the travelling member (the valve member, valve stem and armature) decelerates extremely rapidly when the poppet head contacts the valve seat. The valve stem is typically as thin as possible to minimise the mass of the travelling member and the resulting tensile forces can fracture the valve stem or place limits on the speed at which the valve can close to avoid damage to the valve stem.

However, in the valve member of Figure 1, although the sealing member and actuated closure member travel together when a closing force is applied to the armature and transmitted through the valve stem, when the sealing member contacts the valve seat, there remains a fluid-containing volume between the sealing member and the actuated valve member. Fluid within this volume must flow a significant distance in a radially outward direction to escape from the fluid-containing volume and so the flow of fluid from the fluid-containing volume is restricted. Thus, although the sealing member decelerates very rapidly upon contact with the valve seat, the movement of the actuated valve member is damped over the final part of its travel, while substantially incompressible hydraulic fluid passes out from the fluid-containing volume, spreading the deceleration of the actuated valve member over time and reducing the peak tensile force which is transmitted through the valve stem.

As a result, movement of the armature is decoupled from movement of the sealing member. When the sealing member contacts the valve seat, it decelerates over a very short distance. However, the actuated closure member, and therefore the valve stem and armature which are fixedly connected to the actuated closure member, can continue to move. Furthermore, the opposing surfaces of the sealing member and the actuated closure member, which together define a fluid-containing volume from which the flow of fluid is restricted, function as a damping mechanism which is integral to the travelling member. The damping mechanism is an example of a decelerating mechanism. As a result, the continuing movement of the actuated closure member, and therefore the valve stem and armature, is damped and so the actuated closure member, and therefore the valve stem and armature, decelerate. The actuated closure member, and therefore the valve stem and armature, decelerate over a longer distance and are as a result subject to lower peak forces than would be the case if the sealing member was rigidly fixed to the armature.

Although the closure of the valve is damped in the arrangement of Figure 1, when the valve opens, fluid flow provides no, or only a minimal resistance to the separation of the sealing member and valve seat. Thus, although closure of the valve is damped, opening of the valve is not damped.

Fluid communication passage 28 through the sealing member provides a path for fluid to leave the chamber recessed in the outward facing surface of the sealing member. Accordingly, this fluid communication passage provides a restricted path for fluid to flow out from between the sealing member and actuated closure member, during closing.

It is important that a fluid communication passage, or other route for fluid flow, is provided to enable fluid to be displaced from the fluid containing volume between the sealing member and actuated closure member. Otherwise, there is a risk that the sealing member and actuated closure member will seal around the periphery of their opposed surfaces, trapping a volume of fluid therebetween, or seal flush across their entire opposed surfaces. In either of these situations, substantial forces would act on the sealing member and actuated closure member, potentially damaging these members or generating vibration and noise.

In the embodiment illustrated in Figures 1 and 2, the fluid communication passage extends through the sealing member from the chamber to a location on the inward facing surface of the sealing member located intermediate the fluid flow passage through the valve body and the surface area over which the sealing member makes sealing contact with the valve seat. However, the fluid communication passage could extend through the sealing member to a location on the outward side of the surface area over which the sealing member makes sealing contact with the valve seat, or along the outward facing surface of the sealing member, or through the actuated closure member, or along the outward facing surface of the actuated closure member.

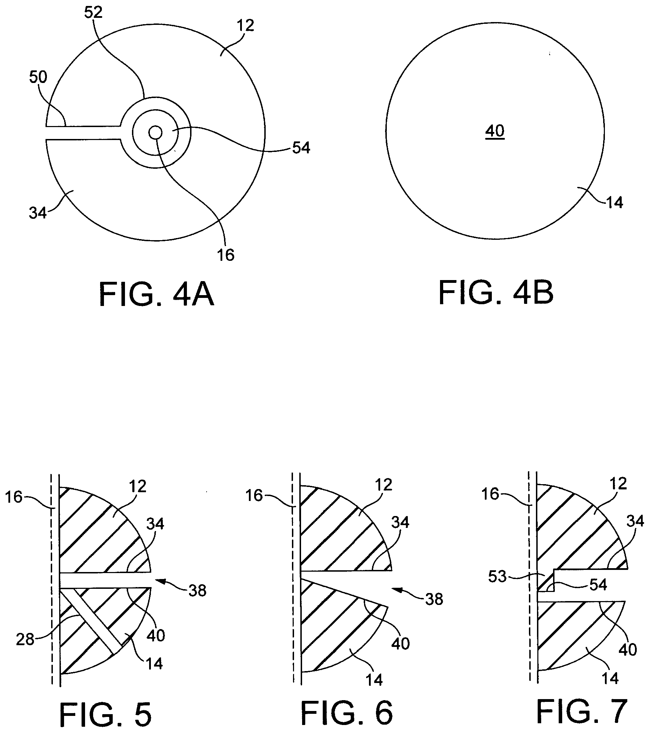

Figures 3, 4A and 4B illustrate an alternative configuration of the sealing member and actuated closure member in which a radial drain channel 50 is provided in the surface of the sealing member. The radial drain channel communications with an annular recess 52 extending around a contact surface 54 of the sealing member which makes sealing contact with the actuated closure member. In this arrangement the contact surface is slightly proud of the majority of the surface of the sealing member so that the sealing member and actuated closure member seal towards their centres, rather than around their peripheries.

Figures 5 through 7 illustrate further alternative embodiments in which there is a fluid communication passage (which may be a bore or an open channel) which provide fluid communication between one side or the other of the valve member and a region towards the centre of the area over which the sealing member and actuated closure member overlap, or in which the opposing surfaces of the sealing member and actuated closure member are shaped to ensure that fluid is not trapped between the actuated closure member and sealing member. In the valve member of Figure 5, a fluid communication passage is provided through the actuated closure member. In the valve member of Figure 6, the inward facing surface of the actuated closure member is formed with a draft angle, rather than being parallel to the outward facing surface of the sealing member. In the valve member of Figure 7, a central protrusion 53 from the sealing member has a contact surface 54 which is proud of the surrounding outward facing surface of the sealing member.

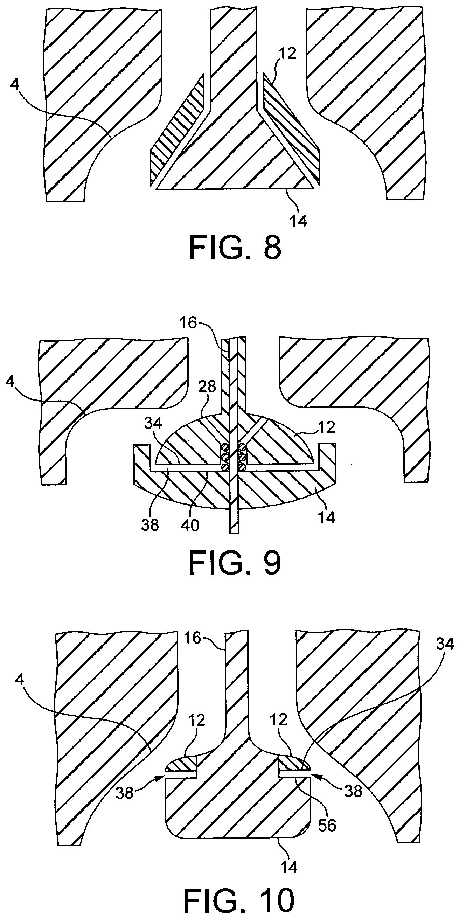

The amount of damping provided by the restriction on fluid flow out of the fluid containing volume between the sealing member and the actuated closure member (and therefore the rate of deceleration) can be determined by the shape and configuration of the sealing member and the actuated closure member. For example, Figures 8 and 9 illustrate configurations in which the amount of damping is relatively high. In the embodiment of Figure 8 (which does not show all of the features of the invention as claimed, but which shows features which are compatible with the invention as claimed), the generally conical opposing surfaces of the sealing member and the actuated closure member increase the distance over which fluid must flow to pass out of the fluid containing volume between the sealing member and the actuated closure member. In the embodiment of Figure 9, the actuated closure member comprises a peripheral flange which extends around the periphery of the sealing member, providing a more tortuous path for fluid to pass out of the fluid containing volume.

Figure 10 (which does not show all of the features of the invention as claimed, but which shows features which are compatible with the invention as claimed) is a schematic diagram (in which biasing means are not illustrated) of an embodiment in which the sealing member does not contact the valve stem but is instead formed as a collar extending around the actuated closure member. The sealing member is operable between a closed position in which it contacts a seating formation 56 of the actuated closure member (functioning as an inward facing surface of the actuated closure member) and an open position (shown) in which the collar is spaced apart from the seating formation, defining a fluid containing volume therebetween. In these embodiments, the mass of the sealing member may be much less than the mass of the actuated closure member, for example, less than 10% of the mass of the actuated closure member. Thus, the portion of the valve member which decelerates most quickly upon impact (the sealing member) is a relatively small proportion of the overall mass of the valve member, reducing the peak force on the valve stem. The sealing member need only be of sufficient extent to contact the valve seat and to create the required amount of damping. The actuated closing member functions to occlude the majority of the fluid flow passage in the closed position and to provide mechanical support for the sealing member.

Where the sealing member is sufficiently small, no fluid communication passage is required to provide an additional path for fluid to flow from the fluid containing volume. Nevertheless, it is preferable to provide a fluid communication passage, for example, in the form of a radial recess in the seating formation of the actuated closure member.

A damping mechanism, or other decelerating mechanism, may be provided integrally to the travelling member other than the mechanism described above. For example, a damping mechanism, or other decelerating mechanism, may be provided within the valve stem, or between the valve stem and the armature. In these cases, an integral valve member may be provided, the valve seat contacting portion of which functions as the sealing member. In each case, the integral damping mechanism, or other decelerating mechanism, results in movement of the sealing member and the armature being decoupled so that they may move independently of each other, but that relative movement is damped during closure of the valve.

In the examples described above, the sealing member is biased apart from the actuated closure member by biasing members (typically springs) which extends between the sealing member and the actuated closure member. However, alternatively, the sealing member may be inwardly biased and the actuated closure member outwardly biased with a separation limiting mechanism provided so that the net effect is that the sealing member and actuated closure member are biased so as to be spaced apart by a predetermined distance when the valve is open.

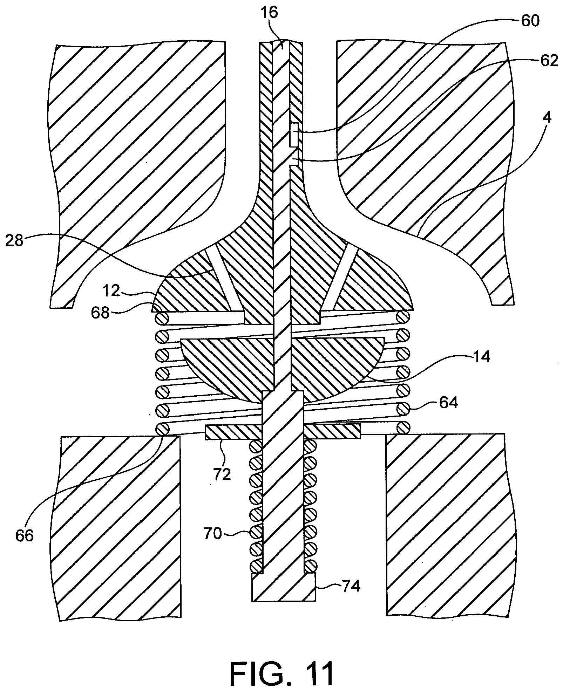

A portion of an example valve in which the components are biased in this way is illustrated in Figure 11 (which does not show all of the features of the invention as claimed, but which shows features which are compatible with the invention as claimed). In this valve, the valve stem comprises a flange 62 which slides within a slot 60 defined by a portion of the sealing member, to limit the maximum separation between the sealing member and the actuated closure member. The sealing member is outwardly biased by a spring 64 extending between a shoulder 66 of the valve body and the periphery 68 of the outward facing surface of the sealing member. The actuated closure member is outwardly biased by a compressed spring 70 indexed between an annular member 72 fixedly mounted to the valve body and a flange 74 of the valve stem.

Although the example valve assemblies disclosed above include a valve stem extending through the valve seat, the invention also include valve assemblies without a valve stem, or with a valve stem extending in the opposite sense, away from the valve seat. An individual valve may include more than one valve member and more than one valve seat and, accordingly, the invention extends to valves including annular valves having a plurality of valve members arranged circumferentially around a central stem, each having a separate valve seat associated therewith.

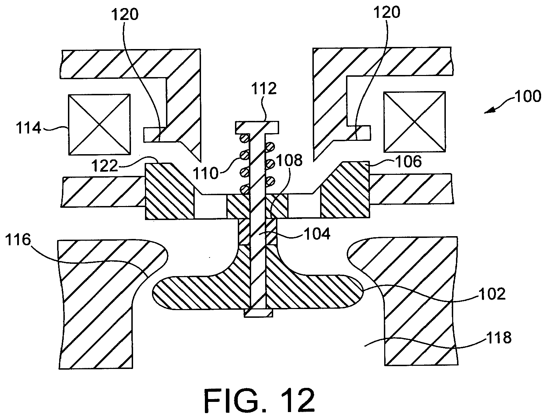

In an alternative embodiment illustrated in Figure 12 (which does not show all of the features of the invention as claimed, but which shows features which are compatible with the invention as claimed), a valve 100 comprises a travelling member including a valve member 102 (the valve seat contacting region of which functions as the sealing member), a valve stem 104, and an armature 106. The valve stem is fixedly mounted to the valve member but the armature is slidably mounted on the valve stem. Thus, the armature can abut an armature facing seat 108 of the valve stem or, in circumstances described below, can separate from the armature facing seat. A spring 110 indexed between the armature and a flange 112 of the valve stem biases the armature to abut the valve stem. An electromagnet 114 is operable to exert a force on the armature where required to close the valve. A main return spring (not shown) is further provided to bias the valve member away from valve seat 116.

The spring is sufficiently strong that, in normal use, the armature remains in contact with the armature facing seat of the valve stem and the travelling member moves as a unit, between the open position illustrated in Figure 12 and a closed position in which the sealing member makes sealing contact with the valve seat. However, if the valve member closes too quickly, for example, if a working chamber 118 has made an unintended pumping stroke (which is a known failure mode of fluid-working pumps and motors) the decelerating force exerted on the armature through the valve stem when the valve member impacts the valve seat exceeds the bias force of pre-loaded spring 110. Thus, the armature moves away from the armature facing seat of the valve stem and continues to move. The valve body includes an annular flange 120 which has a surface parallel to the periphery 122 of the armature. Thus, a squeeze film is formed between the annular flange and the opposing periphery of the armature, damping movement of the armature.

Thus, in contrast to the previous examples, a damping mechanism is provided which instead acts directly on the armature. However, the sealing member and armature remain decoupled so that the armature can continue to move, in some circumstances, after the sealing member has impacted the valve seat, while damping is occurring. The armature can therefore decelerate over a greater distance than the sealing member, reducing peak forces on the armature and through the valve stem, increasing the operational lifetime of the valve or increasing the maximum possible closing speed. Furthermore, in this example, the pre-load on spring 110 has been selected so that the armature does not move relative to the sealing member in normal operating conditions, thereby reducing wear. However, in alternative embodiments, the pre-load could be less such that the armature moves relative to sealing member each time the valve closes.

It is known to provide a pilot valve within a valve, for example from GB 2,430,246 (Stein). In GB 2,430,246, a pilot valve is provided which opens before the main poppet valve, allowing the pressure on either side of main valve to be equalised, to enable opening of the main poppet valve.

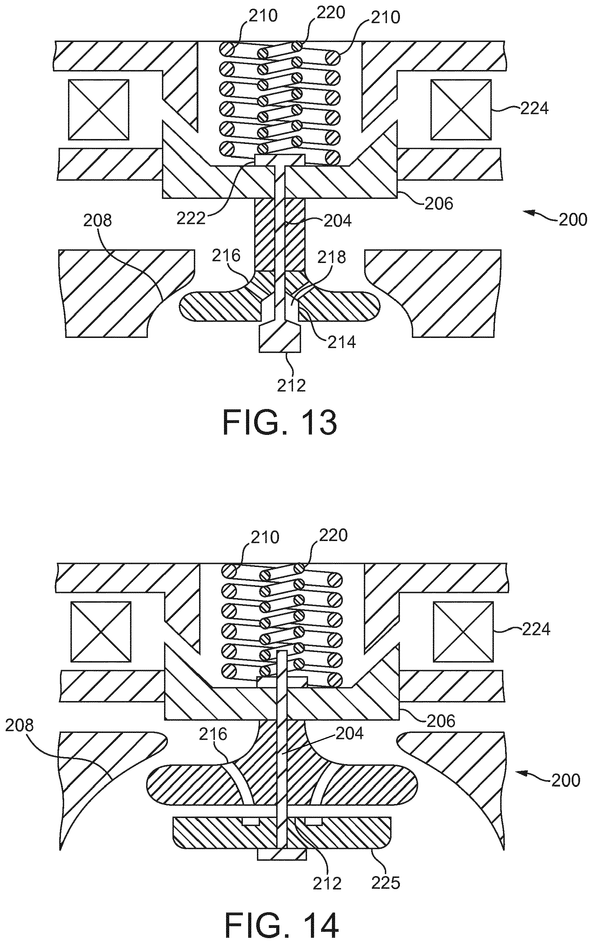

A further example valve 200, illustrated in Figure 13, includes a main valve and a pilot valve. The valve has a travelling member including a poppet valve head 202, functioning as the sealing member, a valve stem 204 and an armature 206. The armature is fixedly attached to a pilot valve member 212 by way of the valve stem. The poppet valve head is fixedly mounted to (e.g. integral with) a collar 207 through which the valve stem extends. The poppet valve head and collar are slidably mounted on the valve stem such that, when the valve is open, the armature abuts the collar and the pilot valve member is spaced apart from pilot valve seat 214 and, when the armature is closest to the electromagnet, the armature contacts a flange 222 of the valve stem and is spaced apart from the collar, and the pilot valve member forms a seal with the pilot valve seat. The poppet valve head is arranged to impact the main valve seat 208 during closure of the valve and to form a seal between the poppet valve head and the valve seat when the valve is closed.

A main spring 210 indexed between the valve body and armature biases the travelling member towards the illustrated valve open position. Fluid channels 216 extend through the poppet valve head to a chamber 218 between the poppet valve head and the pilot valve member. Thus, when the pilot valve member is spaced apart from the pilot valve seat, fluid can flow through the fluid channels. When the valve is used in a fluid-working machine to regulate the flow of fluid between a manifold and a working chamber (which has a contained volume), any pressure differential across the poppet valve head can be reduced by this flow, when the pilot valve is open, facilitating the opening of the valve by separation of the poppet valve head from the main valve seat.

A pilot valve return spring 220 is indexed between the valve body and the valve stem flange. When the main valve and pilot valve are both open the, the main spring biases the armature away from the electromagnet, the armature abuts the collar and the pilot valve is spaced apart from the pilot valve seat. When the valve is to be closed, a current is supplied to the electromagnet 224. As a result, the armature is attracted to the electromagnet. The armature slides along the valve stem and contacts the valve stem flange, pulling the pilot valve closed and pulling the poppet valve head into sealing contact with the main valve seat.

The movement of the armature towards the electromagnet 224 charges the main spring and the pilot valve return spring. The main spring provides a return force to facilitate opening of the main valve when the current to the electromagnet is switch off. However, the pilot valve return spring provides a return force biasing the pilot valve sealing member away from the pilot valve seat.

As the surface area of the pilot valve is much less than the surface area of the main valve then, provided that the strength of the main spring and pilot valve return spring are chosen appropriately, the pilot valve will be able to open against a greater pressure differential when the electromagnet is switched off than the main valve, thereby providing a valve which is better able to open against a pressure differential. The pilot valve return spring may be relatively strong because it only contacts the armature during the last part of its travel. The maximum possible strength of the main spring is, however, limited by the need to be able to rapidly close the valve.

In this valve, the armature and poppet valve head are decoupled and so the armature is able to continue to travel, charging the pilot valve return spring, after the poppet valve head has impacted the main valve seat, during closing of the valve.

Figure 14 illustrates an alternative embodiment of the valve of Figure 13 in which movement of the armature relative to the poppet valve head is damped by fluid retained between the poppet valve head and an actuated closure member 224, part of which functions as the pilot valve sealing member, after the poppet valve head impacts the main valve seat 208.

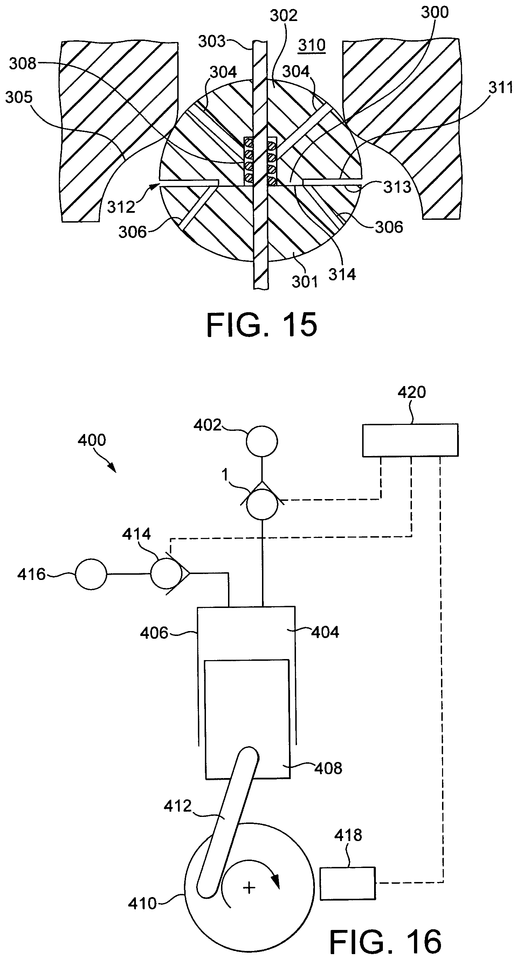

Figure 15 is a sectional view through a portion of an embodiment of a valve in which the poppet valve head (functioning as the sealing member) and the armature are decoupled and the valve includes a pilot valve. Figure 15 is a detail of the valve member while the main valve and pilot valve are closed.

A pilot valve is formed by protrusion 300 from the outward surface of the poppet valve head 302. Fluid communication passages 304, 306 are provided through both the poppet valve head and the actuated valve member 301 so that the fluid pressure in chamber 308 equilibrates with the fluid pressure within the fluid flow passage 310 through the valve body and the fluid pressure in the fluid containing volume 312 which remains between opposing surface 311 and 313 of the poppet valve head and the actuated valve member when the valve is closed, around the protrusion 300, equilibrates with the fluid pressure on the outward side of the actuated valve member. Thus, the pressure differential between chamber 308 and fluid containing volume 312, across the protrusion 300, is substantially the same as the pressure differential across the valve member when the valve is closed.

When the valve is open, the poppet valve head is spaced apart from valve seat 305. When the valve is actuated, by the action of the electromagnets (not shown) on the armature (not shown), to close the valve, a closing force is transmitted to the actuated closure member through a valve stem 303.

The force acting against movement of the actuated valve member due to fluid pressure differential across the protrusion 300 is much less than the force acting against movement of the poppet valve head away from the valve seat, by the ratio of the surface area circumscribed by the seal between the sealing member and the valve seat to the surface area of the sealing surface 314 of the protrusion.

Thus, when the valve is opened against a pressure differential, the actuated valve member begins to move before the poppet valve head, opening a pathway for fluid to flow through the fluid communication passages 304 and 306, and radially inwards through the fluid containing volume between the sealing member and the actuated valve member to equilibrate the pressure differential across the valve member and, therefore, the pressure differential across the sealing member. This enables the sealing member to more readily unseat from the valve seat and so facilitates opening of the valve against a pressure differential.

Figure 16 is a schematic diagram of a fluid working machine, shown generally as 400, incorporating any of the example valve assemblies 1 described herein as a low pressure valve which regulates the flow of hydraulic fluid between a low pressure manifold 402 and a working chamber 404. The low pressure valve is oriented such that fluid exhausted from the working chamber to the low pressure manifold flows through the valve seat in the same sense that the poppet valve head moves from the open position to the closed position during each exhaust stroke when the fluid working machine functions as a motor and during idle exhaust strokes when the fluid working machine functions as a pump.

The valve of the present invention is especially useful when the fluid-working machine is operating as a motor due to the high closing velocity of low-pressure valve in motoring applications. Valve assemblies including a pilot valve are especially useful for regulating the flow of fluid between a working chamber and a low pressure manifold when the fluid-working machine is operating as a motor as, in these circumstances, it is necessary to open the low pressure valve at the end of an expansion stroke, when the pressure within the working chamber can remain above the pressure of the low pressure manifold for a significant period of time due to factors including the evaporation of dissolved gas.

The working chamber is defined by the interior of a cylinder 406 and a piston 408 which is mechanically linked to the rotation of a crankshaft 410 by a suitable mechanical linkage 412, and which reciprocates within the cylinder to cyclically vary the volume of the working chamber. A high pressure valve 414 regulates the flow of hydraulic fluid between a high pressure manifold 416 and the working chamber. The example fluid working machine includes a plurality of working chambers mechanically linked to the rotation of the same crankshaft, with appropriate phase differences. A shaft position and speed sensor 418 determines the instantaneous angular position and speed of rotation of the shaft, and transmits shaft position and speed signals to a controller 420, which enables a controller to determine instantaneous phase of the cycles of each individual working chamber. The controller is typically a microprocessor or microcontroller which executes a stored program in use. The low pressure valve is electronically actuatable, and the opening and/or the closing of the high and/or low pressure valves is under the active control of the controller.

The example fluid working machine is operable to function as either a pump or a motor in alternative operating modes. When operating as a pump, low pressure fluid is received from the low pressure manifold, and output through the high pressure valve to the high pressure manifold. Shaft power is therefore converted into fluid power. When operating as a motor, high pressure fluid is received from the high pressure manifold, and output through the low pressure valve to the low pressure manifold. Fluid power is therefore converted into shaft power.

The controller regulates the opening and/or closing of the low and high pressure valves to determine the displacement of fluid through each working chamber, on a cycle by cycle basis, in phased relationship to cycles of a working chamber volume, to determine the net throughput of fluid through the machine. Thus, the fluid working machine operates according to the principles disclosed in EP 0 361 927, EP 0 494 236, and EP 1 537 333, the contents of which are incorporated herein by virtue of this reference.

Valves in which the poppet valve head and the armature are decoupled, and movement of the armature subsequent to the impact of the poppet valve head on the valve seat is damped, are especially useful in fluid working machines of this type, where substantial forces act on the travelling member due to the relatively large mass of suitable armatures.

Furthermore, valves according to Figures 13 and 14, in which a pilot valve return spring is provided which is charged by movement of the armature to provide a pilot valve return force facilitate opening of the valve against a pressure differential. Valves of this are especially useful for regulating the flow of fluid between the working chamber of a fluid-working machine according to Figure 16 and the low pressure manifold. Where the fluid-working machine is a fluid-working motor, or a fluid-working pump-motor operating in motoring mode, it is necessary for the pressure in the working chamber to drop to close to the pressure in the low pressure manifold, at around bottom dead centre. However, the time taken for the pressure to drop can be substantial and, in some failure modes, the pressure may not drop sufficiently. Reasons for the slow drop in working chamber pressure include the relatively slow proportional change in working chamber volume close to bottom dead centre and dissolved air in the hydraulic fluid which can evaporate due to the pressure drop, thereby lowering the rate of pressure reduction.

## Claims

1. An electronically controlled valve (200) for regulating the supply of fluid between a working chamber of a fluid working machine and a manifold, the valve comprising a body defining a primary valve seat (208), a fluid flow passage extending through the valve body from the primary valve seat (208), a travelling member, and an electromagnet (224), the travelling member comprising a sealing member (202) and an armature (206), the valve (200) having a closed position in which a seal is formed between the primary valve seat (208) and the sealing member (202), and an open position in which the sealing member (202) is spaced apart from the primary valve seat (208), the valve further comprising a pilot valve seat (214) and a pilot valve sealing member (212), **characterised by** a pilot valve elastic member (220) charged in use by the movement of the armature (206) towards the electromagnet (224) during closure of the valve (200) to provide a return force urging the pilot valve sealing member (212) away from the pilot valve seat (214), and by the electronically controlled valve (200) comprising a first fluid port and a second fluid port, the valve (200) regulating the flow of fluid between the first fluid port and the second fluid port, the valve (200) further comprising a pilot valve flow passage (216) which is closed off when the pilot valve member (212) is in sealing contact with the pilot valve seat (214) and is open when the pilot valve member (212) is spaced apart from the pilot valve seat (214), wherein, when the pilot valve flow passage (216) is open and the sealing member (202) is in sealing contact with the primary valve seat (208), the first fluid port is in direct fluid communication with the second fluid port through the pilot valve flow passage (216).

2. An electronically controlled valve (200) according to claim 1, wherein the armature (206) moves along a path having first and second ends, the armature (206) moving from the first end to the second end during closure of the valve (200), wherein the pilot valve elastic member (220) biases the pilot valve sealing member (212) only when the armature (206) is proximate the second end of the path.

3. An electronically controlled valve (200) according to claim 2, wherein the pilot valve elastic member (220) biases the pilot valve sealing member (212) only when the armature (206) has travelled at least 75% of the way from the first end to the second end of the path.

4. An electronically controlled valve (200) according to claim 2 or claim 3, wherein the pilot valve elastic member (220) contacts a pilot travelling member (222), or a member rigidly fixed to the pilot valve sealing member (212), to urge the pilot valve sealing member (212) away from the pilot valve seat (214), only when the armature (206) is proximate the second end of the path, and is spaced apart from the pilot travelling member (222), or the member rigidly fixed to the pilot valve sealing member (212), when the armature is proximate the first end of the path.

5. An electronically controlled valve (200) according to any one preceding claim, wherein the return force is exerted on the pilot valve (212) by the pilot valve elastic member (220) only after the electromagnet has released the armature (206).

6. An electronically controlled valve (200) according to any one preceding claim, wherein the pilot valve elastic member (220) provides a return force urging the pilot valve (212) away from the pilot valve seat (214) without concurrently urging the sealing member (202) away from the primary valve member (208).

7. An electronically controlled valve (200) according to any one preceding claim, wherein the sealing member (202) is movable into sealing contact with the primary valve seat (208) without the pilot valve member (212) moving into sealing contact with the pilot valve seat (214).

8. An electronically controlled valve (200) according to any one preceding claim, further comprising a decelerating mechanism operable to slow the movement of the armature (206) during closure of the valve (200), the sealing member (202) and armature (206) being moveable relative to each other such that the armature (206) can continue to move and decelerate due to the decelerating mechanism after the sealing member (202) has impacted the primary valve seat (208).

9. An electronically controlled valve (200) according to claim 8, wherein the travelling member further comprises an actuated closure member (225), which is connected in fixed relation to the armature (206) at least during closure of the valve (200), wherein the decelerating mechanism is a decelerating mechanism operable to slow movement of the actuated closure member (225) relative to the sealing member (202) after the sealing member (202) has impacted the primary valve seat (208) during closure of the valve (200), thereby slowing movement of the armature (206) relative to the sealing member (202).

10. An electronically controlled valve (200) according to claim 8 or claim 9, wherein the primary valve seat (208) is formed in the sealing member (202), or the actuated closure member (225).

11. An electronically controlled valve (200) according to any one of claims 8 to 10, wherein the actuated closure member (225), or a part thereof, function as the pilot valve sealing member (202).

12. An electronically controlled valve (200) according to any one preceding claim, wherein the pilot valve elastic member (220) is charged in use by the movement of the armature (206) towards the electromagnet (224) only once the sealing member (202) has impacted the primary valve seat (208).

13. An electronically controlled valve (200) according to any one preceding claim, wherein the pilot valve elastic member (220) is charged in use by the movement of the armature (206) towards the electromagnet (224) before the sealing member (202) has impacted the primary valve seat (208).

14. An electronically controlled valve (200) according to any one preceding claim, further comprising one or more further elastic members charged by movement of the pilot valve sealing member (212) which provide a return force urging the pilot valve sealing member (212) away from the pilot valve seat (214).

15. A fluid working machine comprising a working chamber of cyclically varying volume, a low pressure manifold and an electronically controlled valve (200) according to any one preceding claim arranged to regulate the flow of fluid between the working chamber and the low pressure manifold.

16. A fluid working machine according to claim 15, operable to function as a fluid working motor and further comprising a high pressure manifold and a high pressure valve which regulates the flow of fluid between the working chamber and the high pressure manifold, wherein the provided return force facilitates opening of the said valve (200) to allow fluid to flow from the working chamber to the low pressure manifold after closure of a high pressure valve during a motoring cycle.

17. A fluid working machine according to claim 15 or claim 16, wherein the volume of the working chamber cycles with a frequency of at least 20 Hertz, the valve (200) is operable to open, or to close, in less than 5ms, and the pressure differential between the low and high pressure manifolds is at least 10 bar.

## Patentansprüche

1. Elektronisch gesteuertes Ventil (200) zum Regulieren der Zufuhr von Fluid zwischen einer Arbeitskammer einer Fluidarbeitsmaschine und einem Verteiler, wobei das Ventil umfasst: einen einen Primärventilsitz (208) bildenden Körper, einen sich durch den Ventilkörper aus dem Primärventilsitz (208) erstreckenden Fluidströmungskanal, ein Laufglied und einen Elektromagneten (224), wobei das Laufglied ein Dichtglied (202) und einen Anker (206) umfasst, wobei das Ventil (200) eine geschlossene Stellung, in welcher eine Dichtung zwischen dem Primärventilsitz (208) und dem Dichtglied (202) ausgebildet wird, und eine geöffnete Stellung, in welcher das Dichtglied (202) vom Primärventilsitz (208) beabstandet ist, aufweist, wobei das Ventil ferner einen Vorsteuerventilsitz (214) und ein Vorsteuerventildichtglied (212) umfasst, **gekennzeichnet durch** ein federndes Vorsteuerventilglied (220), das im Betrieb **durch** die Bewegung des Ankers (206) auf den Elektromagneten (224) zu während des Schließens des Ventils (200) beaufschlagt wird, um eine das Vorsteuerventildichtglied (212) vom Vorsteuerventilsitz (214) wegdrängende Rückstellkraft bereitzustellen, und **dadurch**, dass das elektronisch gesteuerte Ventil (200) einen ersten Fluidanschluss und einen zweiten Fluidanschluss umfasst, wobei das Ventil (200) die Strömung von Fluid zwischen dem ersten Fluidanschluss und dem zweiten Fluidanschluss regelt, wobei das Ventil (200) ferner einen Vorsteuerventilströmungskanal (216) umfasst, der abgesperrt ist, wenn sich das Vorsteuerventilglied (212) in dichtender Anlage mit dem Vorsteuerventilsitz (214) befindet, und geöffnet ist, wenn das Vorsteuerventilglied (212) vom Vorsteuerventilsitz (214) beabstandet ist, wobei, wenn der Vorsteuerventilströmungskanal (216) geöffnet ist und sich das Dichtglied (202) in dichtender Anlage mit dem Primärventilsitz (208) befindet, sich der erste Fluidanschluss in direkter fluidischer Verbindung mit dem zweiten Fluidanschluss **durch** den Vorsteuerventilströmungskanal (216) befindet.

2. Elektronisch gesteuertes Ventil (200) gemäß Anspruch 1, wobei sich der Anker (206) entlang eines Wegs bewegt, der ein erstes und ein zweites Ende aufweist, wobei sich der Anker (206) während des Schließens des Ventils (200) vom ersten Ende zum zweiten Ende bewegt, wobei das federnde Vorsteuerventilglied (220) das Vorsteuerventildichtglied (212) erst dann vorspannt, wenn sich der Anker (206) nahe dem zweiten Ende des Wegs befindet.

3. Elektronisch gesteuertes Ventil (200) gemäß Anspruch 2, wobei das federnde Vorsteuerventilglied (220) das Vorsteuerventildichtglied (212) erst dann vorspannt, wenn der Anker (206) wenigstens 75% der Strecke vom ersten Ende zum zweiten Ende des Wegs zurückgelegt hat.

4. Elektronisch gesteuertes Ventil (200) gemäß Anspruch 2 oder 3, wobei das federnde Vorsteuerventilglied (220) erst dann in Anlage mit einem Vorsteuerlaufglied (222) oder einem starr am Vorsteuerventildichtglied (212) befestigten Glied kommt, um das Vorsteuerventildichtglied (212) vom Vorsteuerventilsitz (214) wegzudrängen, wenn sich der Anker (206) nahe dem zweiten Ende des Wegs befindet, und vom Vorsteuerlaufglied (222) oder dem starr am Vorsteuerventildichtglied (212) befestigten Element beabstandet ist, wenn sich der Anker nahe dem ersten Ende des Wegs befindet.

5. Elektronisch gesteuertes Ventil (200) gemäß einem der vorhergehenden Ansprüche, wobei die Rückstellkraft auf das Vorsteuerventil (212) durch das federnde Vorsteuerventilglied (220) erst ausgeübt wird, nachdem der Elektromagnet den Anker (206) freigegeben hat.

6. Elektronisch gesteuertes Ventil (200) gemäß einem der vorhergehenden Ansprüche, wobei das federnde Vorsteuerventilglied (220) eine Rückstellkraft bereitstellt, die das Vorsteuerventil (212) vom Vorsteuerventilsitz (214) wegdrängt, ohne gleichzeitig das Dichtglied (202) vom Primärventilglied (208) wegzudrängen.

7. Elektronisch gesteuertes Ventil (200) gemäß einem der vorhergehenden Ansprüche, wobei das Dichtglied (202) in eine dichtende Anlage mit dem Primärventilsitz (208) bewegbar ist, ohne dass sich das Vorsteuerventilglied (212) in eine dichtende Anlage mit dem Vorsteuerventilsitz (214) bewegt.

8. Elektronisch gesteuertes Ventil (200) gemäß einem der vorhergehenden Ansprüche, ferner umfassend einen Verzögerungsmechanismus, der ausgelegt ist, die Bewegung des Ankers (206) während des Schließens des Ventils (200) zu verlangsamen, wobei das Dichtglied (202) und der Anker (206) relativ zu einander bewegbar sind, so dass sich der Anker (206) weiterhin bewegen und aufgrund des Verzögerungsmechanismus verzögern kann, nachdem das Dichtglied (202) auf den Primärventilsitz (208) aufgetroffen ist.

9. Elektronisch gesteuertes Ventil (200) gemäß Anspruch 8, wobei das Laufglied ferner ein betätigtes Schließglied (225) umfasst, das wenigstens während des Schließens des Ventils (200) in feststehender Beziehung mit dem Anker (206) verbunden ist, wobei der Verzögerungsmechanismus ein Verzögerungsmechanismus ist, der ausgelegt ist, die Bewegung des betätigten Schließglieds (225) relativ zum Dichtglied (202) zu verlangsamen, nachdem das Dichtglied (202) während des Schließens des Ventils (200) auf den Primärventilsitz (208) aufgetroffen ist, wodurch die Bewegung des Ankers (206) relativ zum Dichtglied (202) verlangsamt wird.

10. Elektronisch gesteuertes Ventil (200) gemäß Anspruch 8 oder Anspruch 9, wobei der Primärventilsitz (208) im Dichtelement (202) oder im betätigten Schließglied (225) ausgebildet ist.

11. Elektronisch gesteuertes Ventil (200) gemäß einem der Ansprüche 8 bis 10, wobei das betätigte Schließglied (225), oder ein Teil desselben, als das Vorsteuerventildichtglied (202) wirkt.

12. Elektronisch gesteuertes Ventil (200) gemäß einem der vorhergehenden Ansprüche, wobei das federnde Vorsteuerventilglied (220) im Betrieb durch die Bewegung des Ankers (206) auf den Elektromagneten (224) zu erst beaufschlagt wird, nachdem das Dichtglied (202) auf den Primärventilsitz (208) aufgetroffen ist.

13. Elektronisch gesteuertes Ventil (200) gemäß einem der vorhergehenden Ansprüche, wobei das federnde Vorsteuerventilglied (220) im Betrieb durch die Bewegung des Ankers (206) auf den Elektromagneten (224) zu beaufschlagt wird, bevor das Dichtglied (202) auf den Primärventilsitz (208) aufgetroffen ist.

14. Elektronisch gesteuertes Ventil (200) gemäß einem der vorhergehenden Ansprüche, ferner umfassend ein oder mehrere weitere, durch die Bewegung des Vorsteuerventildichtglieds (212) beaufschlagte federnde Glieder, die eine Rückstellkraft bereitstellen, die das Vorsteuerventildichtglied (212) vom Vorsteuerventilsitz (214) wegdrängt.

15. Fluidarbeitsmaschine umfassend eine Arbeitskammer mit zyklisch variierendem Volumen, einen Niederdruckverteiler, und ein elektronisch gesteuertes Ventil (200) gemäß einem der vorhergehenden Ansprüche, das ausgelegt ist, die Strömung von Fluid zwischen der Arbeitskammer und dem Niederdruckverteiler zu regulieren.

16. Fluidarbeitsmaschine gemäß Anspruch 15, die ausgelegt ist, als Fluidarbeitsmotor zu wirken und ferner einen Hochdruckverteiler und ein Hochdruckventil umfasst, das die Strömung von Fluid zwischen der Arbeitskammer und dem Hochdruckverteiler reguliert, wobei die bereitgestellte Rückstellkraft das Öffnen des Ventils (200) erleichtert, damit Fluid nach dem Schließen eines Hochdruckventils während eines motorischen Zyklus aus der Arbeitskammer in den Niederdruckverteiler strömen kann.

17. Fluidarbeitsmaschine gemäß Anspruch 15 oder 16, wobei sich das Volumen der Arbeitskammer zyklisch mit einer Frequenz von wenigstens 20 Hertz verändert, das Ventil (200) ausgelegt ist, in weniger als 5 ms zu öffnen oder zu schließen, und die Druckdifferenz zwischen dem Niederdruckverteiler und dem Hochdruckverteiler wenigstens 10 bar beträgt.

## Revendications

1. Soupape à commande électronique (200) pour réguler l'alimentation de fluide entre une chambre de travail d'une machine de travail à fluide et un collecteur, la soupape comprenant un corps définissant un siège de soupape primaire (208), un passage d'écoulement de fluide s'étendant à travers le corps de soupape depuis le siège de soupape primaire (208), un élément mobile et un électroaimant (224), l'élément mobile comprenant un élément d'étanchéité (202) et une armature (206), la soupape (200) ayant une position fermée dans laquelle un joint d'étanchéité est formé entre le siège de soupape primaire (208) et l'élément d'étanchéité (202), et une position ouverte dans laquelle l'élément d'étanchéité (202) est espacé du siège de soupape primaire (208), la soupape comprenant en outre un siège de soupape pilote (214) et un élément d'étanchéité de soupape pilote (212), **caractérisée par** un élément élastique de soupape pilote (200) chargé lors de l'utilisation par le déplacement de l'armature (206) vers l'électro-aimant (224) pendant la fermeture de la soupape (200) pour fournir une force de rappel poussant l'élément d'étanchéité de soupape pilote (212) loin du siège de soupape pilote (214), et par la soupape à commande électronique (200) comprenant un premier orifice de fluide et un second orifice de fluide, la soupape (200) régulant l'écoulement de fluide entre le premier orifice de fluide et le second orifice de fluide, la soupape (200) comprenant en outre un passage d'écoulement de soupape pilote (216) qui est fermé lorsque l'élément de soupape pilote (212) est en contact étanche avec le siège de soupape pilote (214), et est ouvert lorsque l'élément de soupape pilote (212) est espacé du siège de soupape pilote (214), dans laquelle, lorsque le passage d'écoulement de soupape pilote (216) est ouvert et que l'élément d'étanchéité (202) est en contact étanche avec le siège de soupape primaire (208), le premier orifice de fluide est en communication fluidique directe avec le second orifice de fluide par le biais du passage d'écoulement de soupape pilote (216).

2. Soupape à commande électronique (200) selon la revendication 1, dans laquelle l'armature (206) se déplace le long d'un trajet ayant des première et seconde extrémités, l'armature (206) se déplaçant depuis la première extrémité vers la seconde extrémité pendant la fermeture de la soupape (200), dans laquelle l'élément élastique de soupape pilote (220) sollicite l'élément d'étanchéité de soupape pilote (212) seulement lorsque l'armature (206) se trouve à proximité de la seconde extrémité du trajet.

3. Soupape à commande électronique (200) selon la revendication 2, dans laquelle l'élément élastique de soupape pilote (220) sollicite l'élément d'étanchéité de soupape pilote (212) seulement lorsque l'armature (206) a parcouru au moins 75 % du chemin depuis la première extrémité vers la seconde extrémité du trajet.

4. Soupape à commande électronique (200) selon la revendication 2 ou la revendication 3, dans laquelle l'élément élastique de soupape pilote (220) vient en contact avec un élément mobile pilote (222) ou avec un élément fixé rigidement à l'élément d'étanchéité de soupape pilote (212) pour pousser l'élément d'étanchéité de soupape pilote (212) loin du siège de soupape pilote (214) seulement lorsque l'armature (206) se trouve à proximité de la seconde extrémité du trajet, et est espacé de l'élément mobile pilote (222) ou de l'élément fixé rigidement à l'élément d'étanchéité de soupape pilote (212) lorsque l'armature se trouve à proximité de la première extrémité du trajet.

5. Soupape à commande électronique (200) selon l'une quelconque des revendications précédentes, dans laquelle la force de rappel est exercée sur la soupape pilote (212) par l'élément élastique de soupape pilote (220) seulement après que l'électroaimant a libéré l'armature (206).

6. Soupape à commande électronique (200) selon l'une quelconque des revendications précédentes, dans laquelle l'élément élastique de soupape pilote (220) fournit une force de rappel poussant la soupape pilote (212) loin du siège de soupape pilote (214) sans pousser en même temps l'élément d'étanchéité (202) loin de l'élément de soupape primaire (208).

7. Soupape à commande électronique (200) selon l'une quelconque des revendications précédentes, dans laquelle l'élément d'étanchéité (202) peut être déplacé jusqu'à un contact d'étanchéité avec le siège de soupape primaire (208) sans que l'élément de soupape pilote (212) ne se déplace jusqu'à un contact d'étanchéité avec le siège de soupape pilote (214).

8. Soupape à commande électronique (200) selon l'une quelconque des revendications précédentes, comprenant en outre un mécanisme de décélération destiné à ralentir le déplacement de l'armature (206) pendant la fermeture de la soupape (200), l'élément d'étanchéité (202) et l'armature (206) étant mobiles l'un par rapport à l'autre de telle sorte que l'armature (206) puisse continuer à se déplacer et à ralentir grâce au mécanisme de décélération après que l'élément d'étanchéité (202) a heurté le siège de soupape primaire (208).

9. Soupape à commande électronique (200) selon la revendication 8, dans laquelle l'élément mobile comprend en outre un élément de fermeture actionné (225) qui est raccordé en relation fixe à l'armature (206) au moins pendant la fermeture de la soupape (200), dans laquelle le mécanisme de décélération est un mécanisme de décélération destiné à ralentir le déplacement de l'élément de fermeture actionné (225) par rapport à l'élément d'étanchéité (202) après que l'élément d'étanchéité (202) a heurté le siège de soupape primaire (208) pendant la fermeture de la soupape (200), ce qui permet de ralentir le déplacement de l'armature (206) par rapport à l'élément d'étanchéité (202).

10. Soupape à commande électronique (200) selon la revendication 8 ou la revendication 9, dans laquelle le siège de soupape primaire (208) est formé dans l'élément d'étanchéité (202) ou l'élément de fermeture actionné (225).

11. Soupape à commande électronique (200) selon l'une quelconque des revendications 8 à 10, dans laquelle l'élément de fermeture actionné (225), ou une partie de ce dernier, fait office d'élément d'étanchéité de soupape pilote (202).

12. Soupape à commande électronique (200) selon l'une quelconque des revendications précédentes, dans laquelle l'élément élastique de soupape pilote (220) est chargé lors de l'utilisation par le déplacement de l'armature (206) vers l'électroaimant (224) seulement une fois que l'élément d'étanchéité (202) a heurté le siège de soupape primaire (208).

13. Soupape à commande électronique (200) selon l'une quelconque des revendications précédentes, dans laquelle l'élément élastique de soupape pilote (220) est chargé lors de l'utilisation par le déplacement de l'armature (206) vers l'électroaimant (224) avant que l'élément d'étanchéité (202) n'ait heurté le siège de soupape primaire (208).

14. Soupape à commande électronique (200) selon l'une quelconque des revendications précédentes, comprenant en outre un ou plusieurs éléments élastiques chargés par le déplacement de l'élément d'étanchéité de soupape pilote (212) qui fournissent une force de rappel poussant l'élément d'étanchéité de soupape pilote (212) loin du siège de soupape pilote (214).

15. Machine de travail à fluide comprenant une chambre de travail d'un volume pouvant varier de manière cyclique, un collecteur basse pression et une soupape à commande électronique (200) selon l'une quelconque des revendications précédentes conçue pour réguler l'écoulement de fluide entre la chambre de travail et le collecteur basse pression.

16. Machine de travail à fluide selon la revendication 15, destinée à faire office de moteur de travail à fluide et comprenant en outre un collecteur haute pression et une soupape haute pression qui régule l'écoulement de fluide entre la chambre de travail et le collecteur haute pression, dans laquelle la force de rappel fournie facilite l'ouverture de ladite soupape (200) de sorte à permettre à un fluide de s'écouler depuis la chambre de travail jusqu'au collecteur basse pression après la fermeture d'une soupape haute pression pendant un cycle motorisé.

17. Machine de travail à fluide selon la revendication 15 ou la revendication 16, dans laquelle le volume de la chambre de travail varie avec une fréquence d'au moins 20 Hertz, la soupape (200) est conçue pour s'ouvrir, ou se fermer, en moins de 5 ms et la pression différentielle entre le collecteur basse pression et le collecteur haute pression est d'au moins 10 bars.
